# EUROPÄISCHE PATENTANMELDUNG

(11) **EP 4 184 029 A1**
(43) Veröffentlichungstag der Anmeldung: **24.05.2023**
(21) Anmeldenummer: 22208439.4
(22) Anmeldetag: 18.11.2022
(51) Int. Cl.: F16D 1/076, F16H 57/02

(54) **ANKOPPELVORRICHTUNG ZUM DREHMOMENTÜBERTRAGENDEN ANKOPPELN EINES ANTRIEBSMOTORS AN EIN GETRIEBE**

(30) Priorität: 19.11.2021 LU 500882
(71) Anmelder: Nabtesco Precision Europe GmbH, 40472 Düsseldorf (DE)
(72) Erfinder: Pawliszak, Marco, 45525 Hattingen (DE)
(74) Vertreter: Hoffmann, Jürgen

(57) **Zusammenfassung**

Die Erfindung betrifft eine Ankoppelvorrichtung zum drehmomentübertragenden Ankoppeln einer drehmomenteinspeisenden Antriebsvorrichtung, insbesondere eines Antriebsmotors, an ein anzutreibendes System, wobei die Ankoppelvorrichtung ein Ankoppelvorrichtungsgehäuse zur drehmomentabstützenden Verbindung eines System-Drehmomentabstützelements, insbesondere eines Systemgehäuses, des anzutreibenden Systems mit einem Antriebs-Drehmomentabstützelement der Antriebsvorrichtung, insbesondere einem Antriebsgehäuse, sowie eine innerhalb des Ankoppelvorrichtungsgehäuses rotierbar gelagerte Übertragungswelle aufweist. Die Ankoppelvorrichtung zeichnet sich dadurch aus, dass die Ankoppelvorrichtung innerhalb des Ankoppelvorrichtungsgehäuses eine Aufnahme für ein Getriebe aufweist, in der das Getriebe derart festlegbar ist, dass das Getriebe allenfalls abgesehen von einem Getriebeabtrieb des Getriebes vollständig innerhalb des von dem Ankoppelvorrichtungsgehäuse umgebenen Raum angeordnet ist.

## Beschreibung

Die Erfindung betrifft eine Ankoppelvorrichtung zum drehmomentübertragenden Ankoppeln einer drehmomenteinspeisenden Antriebsvorrichtung, insbesondere eines Antriebsmotors, an ein anzutreibendes System, wobei die Ankoppelvorrichtung ein Ankoppelvorrichtungsgehäuse zum drehmomentabstützenden Verbinden eines System-Drehmomentabstützelements, insbesondere eines Systemgehäuses, des anzutreibenden Systems mit einem Antriebs-Drehmomentabstützelement der Antriebsvorrichtung, insbesondere einem Antriebsgehäuse, sowie eine innerhalb des Ankoppelvorrichtungsgehäuses rotierbar gelagerte Übertragungswelle aufweist.

Ankoppelvorrichtungen dieser Art dienen dazu, gemeinsam mit einem Getriebe ein Getriebesystem zu bilden, um im Ergebnis eine drehmomenteinspeisende Antriebsvorrichtung, beispielsweise einem Antriebsmotor, an ein anzutreibendes System anzukoppeln. Hierbei muss einerseits eine Abtriebswelle der Antriebsvorrichtung mit einem Eingang des anzutreibenden Systems wirkverbunden werden und muss außerdem zusätzlich eine drehmomentabstützende Verbindung eines Antriebs-Drehmomentabstützelements der Antriebsvorrichtung, beispielsweise eines Antriebsgehäuses eines Antriebsmotors, zu einem Drehmomentabstützelement des anzutreibenden Systems (zumeist ein Gehäuse oder eine Halterung) hergestellt werden.

Bei Anwendungen, bei denen die Gefahr der Verunreinigung von zu verarbeitenden Gütern besteht, werden Getriebe aus besonderen Materialien verwendet. Beispielsweise bei Anwendungen in der Lebensmittel oder Futtermittel verarbeitenden Industrie oder im pharmazeutischen Bereich werden Getriebesysteme mit einem Getriebe verwendet, das aus Edelstahl hergestellt ist. Derartige Getriebe sind nachteiliger Weise besonders teuer.

Es ist eine Aufgabe der vorliegenden Erfindung, eine Ankoppelvorrichtung anzugeben, die einen vergrößertes Anwendungsspektrum bietet.

Die Aufgabe wird durch eine Ankoppelvorrichtung gelöst, die dadurch gekennzeichnet ist, dass die Ankoppelvorrichtung innerhalb des Ankoppelvorrichtungsgehäuses eine Aufnahme für ein Getriebe aufweist, in der das Getriebe derart festlegbar ist, dass das Getriebe allenfalls abgesehen von einem Getriebeabtrieb des Getriebes vollständig innerhalb des von dem Ankoppelvorrichtungsgehäuse umgebenen Raum angeordnet ist.

Die erfindungsgemäße Ankoppelvorrichtung hat den ganz besonderen Vorteil, dass insbesondere bei Anwendungen, bei denen die Gefahr einer Verschmutzung von zu verarbeitenden Gütern besteht, kostengünstige Getriebe aus Standard-Material, wie beispielsweise Vergütungsstahl und/oder Stahl, der kein Edelstahl ist, verwendet werden können. Dies wird insbesondere dadurch erreicht, dass das Getriebe, vorzugsweise als eine fertig montierte und funktionsfähige Baueinheit, (allenfalls abgesehen von einem Getriebeabtrieb des Getriebes) in der Ankoppelvorrichtung angeordnet wird, so dass es (spätestens nachdem eine Ankopplung an das anzutreibende System und die Antriebsvorrichtung erfolgt ist) vollständig, insbesondere flüssigkeitsdicht und/oder gasdicht, eingehaust ist. Auf diese Weise ist wirkungsvoll vermieden, dass Partikel des Getriebes in Kontakt mit mittels des anzutreibenden Systems zu verarbeitenden Gütern kommt. Beispielsweise um eine Tauglichkeit zur Verwendung innerhalb einer Vorrichtung zum Verarbeiten von Lebensmitteln zu erreichen, muss lediglich die Außenseite des Ankoppelvorrichtungsgehäuses aus einem geeigneten Materialbestehen. Beispielsweise kann das Ankoppelvorrichtungsgehäuse hierzu aus Edelstahl hergestellt sein und/oder eine geeignete Beschichtung aus einem lebensmittelechten Material aufweisen. Die Antriebsvorrichtung und das anzutreibende System müssen ohnehin eine entsprechende Eignung aufweisen. Jedoch ergeben sich durch die Verwendung der erfindungsgemäßen Ankoppelvorrichtung keine besonderen zusätzlichen Anforderungen an die Antriebsvorrichtung oder das anzutreibende System.

In erfindungsgemäßer Weise wurde außerdem erkannt, dass Getriebe aus Edelstahl oftmals hinsichtlich ihrer Funktion, Lebensdauer und/oder Belastbarkeit schlechter sind, als andere Getriebe. Dies liegt daran, dass Getriebebauteile aus Edelstahl oftmals hinsichtlich ihrer Funktion innerhalb des Getriebes schlechtere Eigenschaften aufweisen, als Getriebebauteile aus anderen Materialien, insbesondere aus Stahl, der kein Edelstahl ist.

Wie bereits erwähnt, kann die Aufnahme insbesondere dazu ausgebildet sein, ein Getriebe aufzunehmen, das als eine fertig montierte und funktionsfähige Baueinheit ausgebildet ist. Dies hat den ganz besonderen Vorteil, dass ein Getriebe modulartig verwendet werden kann, ohne Teile davon für die Ankopplung an die Ankoppelvorrichtung vorübergehend demontieren zu müssen. Bei einer solchen Ausführung ist es vorteilhaft nicht notwendig, das Getriebe für den Einbau zu zerlegen, was den Montagevorgang an sich vereinfacht und darüber hinaus gewährleistet, dass das Getriebe genau in dem Zustand zum Einsatz kommt und verbleibt, den es hinsichtlich seiner Funktionsfähigkeit, insbesondere unmittelbar nach seiner Herstellung, hatte. Dies hat den weiteren ganz besonderen Vorteil, dass das Getriebe in dem Zustand eingebaut und verwendet werden kann, in dem es herstellerseitig (insbesondere unmittelbar nach seiner Herstellung) getestet wurde, was die Zuverlässigkeit erhöht und die Ausfallwahrscheinlichkeit senkt.

Insbesondere kann die Ankoppelvorrichtung vorteilhaft derart ausgebildet sein, dass das Getriebe axial in die Aufnahme eingeschoben und dort, beispielsweise mittels mehrerer Befestigungsschrauben, fixiert werden kann.

Bei einer ganz besonders vorteilhaften Ausführung weist die Aufnahme einen innenseitig im Ankoppelvorrichtungsgehäuse ausgebildeten, umlaufenden Falz zum, insbesondere formschlüssigen, Aufnehmen eines Bauteils des Getriebes auf. Das Bauteil des Getriebes kann vorteilhaft beispielsweise ein, insbesondere flanschartig ausgebildetes, Getriebe-Drehmomentabstützelement des Getriebes sein. Das Drehmomentabstützelement kann beispielsweise mehrere Durchgangsbohrungen für Befestigungsschrauben aufweisen. Das Drehmomentabstützelement wird drehfest relativ zu dem Ankoppelvorrichtungsgehäuse befestigt. Insbesondere kann das Getriebe-Drehmomentabstützelement Teil eines Getriebegehäuses des Getriebes sein.

Bei einer besonders robusten Ausführung ist das Ankoppelvorrichtungsgehäuse einteilig ausgebildet. Auf diese Weise werden vorteilhaft Ankoppelbereiche einzelner Gehäuseteile vermieden, die abgedichtet werden müssen.

Das Ankoppelvorrichtungsgehäuse kann vorteilhaft jedoch auch mehrteilig ausgebildet sein. Insbesondere kann das Ankoppelvorrichtungsgehäuse einen Hauptabschnitt und einen daran befestigten oder befestigbaren Antriebsbefestigungsabschnitt und/oder einen daran befestigten oder befestigbaren Systembefestigungsabschnitt aufweisen.

Der Systembefestigungsabschnitt dient dazu, eine drehmomentabstützende Verbindung zu einem anzutreibenden System herzustellen. Der Systembefestigungsabschnitt kann insbesondere einen Flansch aufweisen. Der Antriebsbefestigungsabschnitt dient dazu, eine drehmomentabstützende Verbindung zu einer Antriebsvorrichtung herzustellen. Der Antriebsbefestigungsabschnitt kann insbesondere einen Flansch aufweisen. Auf diese Weise wird eine besonders hohe Flexibilität erreicht, weil beispielsweise derselbe Typ von Hauptabschnitt durch die Verwendung eines abgewandelten Antriebsbefestigungsabschnitts und/oder durch die Verwendung eines abgewandelten Systembefestigungsabschnitts für eine andere Anwendung mit einem anderen anzutreibenden System und/oder mit einer anderen Antriebsvorrichtung eingesetzt werden kann.

Bei einer besonderen Ausführung ist Hauptabschnitt unmittelbar mit dem Antriebsbefestigungsabschnitt und dem Systembefestigungsabschnitt verbunden. Der Antriebsbefestigungsabschnitt und der Systembefestigungsabschnitt können hierbei insbesondere an einander gegenüberliegenden, axialen Enden des Hauptabschnitts angeordnet sein. Insbesondere bei einer solchen Vorrichtung kann vorteilhaft vorgesehen sein, dass ein Befestigungsmittel zum Befestigen des Getriebes in der Aufnahme von einer Außenseite des Ankoppelvorrichtungsgehäuse nicht mehr unmittelbar zugänglich ist, nachdem die Ankoppelvorrichtung zusammen mit dem Getriebe an einem anzutreibenden System befestigt wurde. Das Befestigungsmittel kann insbesondere mehrere Befestigungsschrauben aufweisen.

Der Systembefestigungsabschnitt und/oder der Antriebsbefestigungsabschnitt können insbesondere jeweils zusätzlich als Dichtungselement ausgebildet sein, insbesondere um eine flüssigkeitsdichte und/oder gasdichte Abdichtung des Innenraumes des Ankoppelvorrichtungsgehäuses zu erreichen. Alternativ ist es natürlich auch möglich, zwischen den Bauteilen jeweils wenigstens eine Dichtung anzuordnen.

Bei einer besonders vorteilhaften Ausführung ist das Ankoppelvorrichtungsgehäuse rotationssymmetrisch ausgebildet. Dies hat den ganz besonderen Vorteil einer besonders kompakten Bauweise. Zumindest kann der Hauptabschnitt vorteilhaft rotationssymmetrisch ausgebildet sein.

Ebenfalls im Hinblick auf eine möglichst kompakte Bauweise kann das Ankoppelvorrichtungsgehäuse zumindest außen eine Glockenform oder eine Kegelstumpfform aufweisen. Eine solche Form hat den weiteren Vorteil, dass ein einfaches Reinigen ermöglicht ist. Zumindest kann der Hauptabschnitt außen eine Glockenform oder eine Kegelstumpfform aufweisen.

Bei einer ganz besonders vorteilhaften Ausführung weist das Ankoppelvorrichtungsgehäuse, zumindest jedoch der Hauptabschnitt, in einer Querschnittsebene entlang der Axialrichtung eine stetig verlaufende Außenkontur auf. Insbesondere kann die Außenkontur eine zusammenhängende Kurve sein, die keine Sprünge macht, keine Abwinklungen aufweist und die man ohne Abzusetzen zeichnen kann. Eine solche Ausführung kann besonders einfach sauber gehalten und gereinigt werden, was insbesondere bei Anwendungen von Vorteil ist, bei denen das Ankoppelvorrichtungsgehäuse mit empfindlichen Gütern, wie beispielsweise Lebensmitteln, in Berührung kommen kann. In dieser Hinsicht kann das Ankoppelvorrichtungsgehäuse alternativ oder zusätzlich derart ausgebildet sein, dass es, insbesondere in dem Hauptabschnitt, außenseitig frei von Kanten und/oder frei von Vorsprüngen und/oder frei von Vertiefungen ist.

Hinsichtlich des Materials, aus dem das Ankoppelvorrichtungsgehäuse hergestellt ist, gibt es keine grundsätzlichen Beschränkungen. Allerdings muss das Ankoppelvorrichtungsgehäuse ausreichend stabil ausgebildet sein, um die auftretenden Drehmomente abstützen zu können. Das Ankoppelvorrichtungsgehäuse kann vorteilhaft insbesondere aus Stahl oder aus Titan oder aus Edelstahl oder aus Aluminium hergestellt sein. Insbesondere kann das Ankoppelvorrichtungsgehäuse aus einem Material hergestellt sein, das Stahl oder Titan oder Edelstahl oder Aluminium beinhaltet. Das Ankoppelvorrichtungsgehäuse kann insbesondere wenigstens teilweise, insbesondere vollständig, aus einer Metalllegierung, insbesondere aus Edelstahl, hergestellt sein. Es ist auch möglich, dass das Ankoppelvorrichtungsgehäuse wenigstens teilweise, insbesondere vollständig, aus Kunststoff hergestellt ist.

Bei einer vorteilhaften Ausführung ist das Ankoppelvorrichtungsgehäuse wenigstens auf der Außenseite beschichtet oder eloxiert oder brüniert. Eine solche Ausführung ist besonders gut gegen äußere Einflüsse, wie Beschädigung und Verschmutzung, geschützt.

Bei einer ganz besonders vorteilhaften Ausführung ist das Ankoppelvorrichtungsgehäuse zumindest auf seiner Außenseite, insbesondere vollständig, mit einem lebensmittelechten Material beschichtet. Alternativ oder auch zusätzlich kann das Ankoppelvorrichtungsgehäuse aus einem lebensmittelechten Material hergestellt sein.

Wie bereits erwähnt, kann vorteilhaft vorgesehen sein, dass ein Befestigungsmittel zum Befestigen des Getriebes derart angeordnet ist oder anordenbar ist, dass es nicht mehr unmittelbar zugänglich ist, nachdem die Ankoppelvorrichtung zusammen mit dem Getriebe an einem anzutreibenden System befestigt wurde. Es hat sich nämlich in der Praxis gezeigt, dass es zuweilen zu Beschädigungen kommt, wenn versucht wird, ein installiertes Getriebesystem, das ein Getriebe und eine Ankoppelvorrichtung aufweist, von einem anzutreibenden System zu lösen, weil versehentlich auch die Verbindung der Ankoppelvorrichtung zu dem Getriebe gelöst wird. Dies geschieht zumeist dann, wenn der Monteur unreflektiert sämtliche Schrauben löst, die er sehen kann. Hierbei werden nämlich nicht nur die Halteschrauben zum Befestigen an dem anzutreibenden System gelöst, sondern auch die Befestigungsschrauben gelöst, die die Ankoppelvorrichtung mit dem Getriebe drehmomentabstützend verbinden. Ein Lösen der Ankoppelvorrichtung von dem Getriebe hat zumeist unmittelbar zur Folge, dass das Schmiermittel ausläuft und eine Reparatur am Anwendungsort wegen der dortigen Umstände, insbesondere wegen schlechter Zugänglichkeit und/oder Verschmutzung, in den allermeisten Fällen nicht möglich ist, so dass zumeist eine Reparatur beim Hersteller erforderlich wird, bevor das Getriebesystem wieder eingebaut werden kann. Bei der oben erwähnten Ausführung ist ein versehentliches Lösen der Verbindung der Ankoppelvorrichtung zu dem Getriebe ausgeschlossen. Dies wird dadurch erreicht, dass das Befestigungsmittel, das insbesondere mehrere Befestigungsschrauben aufweisen kann, nicht mehr unmittelbar zugänglich ist, nachdem das Ankoppelvorrichtungsgehäuse zusammen mit einem Getriebe an ein anzutreibendes System angekoppelt wurde. Insbesondere kann beispielsweise vorgesehen sein, dass die Schraubenköpfe der Befestigungsschrauben nach dem Ankoppeln an ein anzutreibendes System verdeckt und damit unzugänglich sind. Die Gefahr, das Befestigungsmittel beim dem Versuch des Abmontierens des gesamten Getriebesystems von dem anzutreibenden System zu lösen besteht nämlich nicht, weil das Befestigungsmittel bei einer solchen Ausführung allenfalls erst nach dem Lösen des gesamten Getriebesystems von dem anzutreibenden System zugänglich ist.

Insbesondere kann die Ankoppelvorrichtung vorteilhaft derart ausgebildet sein, dass das Befestigungsmittel von einer Außenseite des Ankoppelvorrichtungsgehäuses nicht mehr unmittelbar zugänglich ist, nachdem die Ankoppelvorrichtung, insbesondere zusammen mit einem Getriebe, an einem anzutreibenden System befestigt wurde. Auf diese Weise ist besonders wirkungsvoll vermieden, dass ein Monteur, der versucht, das Getriebesystem von einem anzutreiben System zu lösen, überhaupt an das Befestigungsmittel gelangt.

Das Befestigungsmittel kann zum Fixieren des Getriebes in der Aufnahme wenigstens eine Befestigungsschraube, vorzugsweise mehrere Befestigungsschrauben, aufweisen. Das Ankoppelvorrichtungsgehäuse kann wenigstens eine, insbesondere axial ausgerichtete Gewindebohrung aufweisen, in die die Befestigungsschraube einschraubbar ist.

Bei einer besonderen Ausführung weist das Ankoppelvorrichtungsgehäuse mehrere weitere Gewindebohrungen auf, die insbesondere entlang eines stirnseitigen Umfangsrandes des Ankoppelvorrichtungsgehäuses (insbesondere des Systembefestigungsabschnitts) angeordnet sein können. In die weiteren Gewindebohrungen können insbesondere Halteschrauben eingeschraubt werden, um ein Drehmomentabstützelement des anzutreibenden Systems mit dem Getriebesystem zu verbinden. Das Drehmomentabstützelement des anzutreibenden Systems kann beispielsweise eine Halterung oder ein Gehäuse mit Durchgangsbohrungen sein, durch die die Halteschrauben gesteckt und anschließend in die weiteren Gewindebohrungen eingeschraubt werden können.

Bei einer besonderen Ausführung weist die Übertragungswelle ein Abtriebsende aufweist, das dazu ausgebildet und bestimmt ist, mit einem Getriebeeingang des Getriebes wirkverkoppelt zu werden. Beispielsweise kann das Abtriebsende eine Verzahnung aufweisen, die mit wenigstens einem Zahnrad des Getriebes in Zahneingriff steht. Insbesondere kann es sich bei dem Getriebe um ein Zykloidgetriebe handeln. Bei einer solchen Ausführung kann vorteilhaft vorgesehen sein, dass eine Außenverzahnung des Abtriebsendes der Übertragungswelle in kämmendem Zahneingriff mit Außenverzahnungen der Exzenterwellen des Zykloidgetriebes steht, wenn die Ankoppelvorrichtung an das Zykloidgetriebe angekoppelt ist.

Insbesondere kann die Übertragungswelle vorteilhaft derart ausgebildet und angeordnet sein, dass beim Herstellen einer Verbindung des Ankoppelvorrichtungsgehäuses mit einem Getriebe-Drehmomentabstützelement automatisch, insbesondere nach dem Prinzip einer Steckverbindung, eine Wirkverbindung der Übertragungswelle mit dem Getriebe hergestellt wird.

Alternativ oder zusätzlich kann vorteilhaft vorgesehen sein, dass die Übertragungswelle ein Antriebsende aufweist, das dazu ausgebildet und bestimmt ist, insbesondere kraftschlüssig, mit einer Abtriebswelle einer drehmomenteinspeisenden Antriebsvorrichtung drehfest verbunden zu werden. Hierzu kann das Antriebsende beispielsweise als geschlitzte Hohlwelle ausgebildet sein, in die die Abtriebswelle einer drehmomenteinspeisenden Antriebsvorrichtung, beispielsweise die Abtriebswelle eines elektrischen Antriebsmotors, eingesteckt und mittels eines Klemmrings festgeklemmt werden kann, um eine drehfeste Verbindung herzustellen. Insbesondere kann vorteilhaft vorgesehen sein, dass an dem Antriebsende ein Klemmring mit einer tangential verlaufenden Spannschraube angeordnet ist, mittels dem der Durchmesser der axialen Bohrung verringerbar ist, wobei der Klemmring einen einteiligen geschlitzten Ring aufweist, dessen freie Enden mittels einer Spannschraube einander annäherbar sind und der aus Aluminium oder aus einer Aluminiumlegierung hergestellt ist und/oder der überwiegend aus Aluminium besteht.

Vorzugsweise ist die Übertragungswelle mittels wenigstens eines Wälzlagers rotierbar gelagert. Hierdurch ist vorteilhaft eine verlustfreie Drehmomentübertragung gewährleistet.

Von ganz besonderem Vorteil ist ein Getriebesystem, das ein Getriebe und eine erfindungsgemäße Ankoppelvorrichtung beinhaltet. Das Getriebesystem kann vorteilhaft als eine vormontierte und einsatzfertige Baueinheit hergestellt werden, die am Einsatzort montiert werden kann, ohne hierfür Bauteile des Getriebesystems wieder demontieren zu müssen.

Von ganz besonderem Vorteil ist ein Antriebssystem, das eine drehmomenteinspeisende Antriebsvorrichtung und ein erfindungsgemäßes Getriebesystem beinhaltet. Die Antriebsvorrichtung kann ein, insbesondere elektrischer, Antriebsmotor sein. Hierbei kann insbesondere vorgesehen sein, dass der Antriebsmotor unmittelbar an die Ankoppelvorrichtung angekoppelt ist

Alternativ ist es beispielsweise auch möglich, dass die Antriebsvorrichtung einen, insbesondere elektrischen, Antriebsmotor aufweist, der lediglich mittelbar, nämlich beispielsweise über ein weiteres Getriebe, an die Ankoppelvorrichtung angekoppelt ist. Insoweit kann die Antriebsvorrichtung ganz allgemein ein weiteres Getriebe aufweisen, das unmittelbar an die Ankoppelvorrichtung angekoppelt ist.

Das Antriebssystem kann vorteilhaft als eine vormontierte und einsatzfertige Baueinheit hergestellt werden, die am Einsatzort montiert werden kann, ohne hierfür Bauteile des Antriebssystems wieder demontieren zu müssen.

Außerdem ist eine Vorrichtung von ganz besonderem Vorteil, die ein anzutreibendes System aufweist, an das ein solches Antriebssystem drehmomentübertragend angekoppelt ist. Vorzugsweise ist hierbei das Getriebe durch das Ankoppelvorrichtungsgehäuse, das anzutreibende System und die Antriebsvorrichtung vollständig, insbesondere flüssigkeitsdicht und/oder gasdicht, eingehaust.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel eines erfindungsgemäßen Getriebesystems in einer Querschnittsdarstellung, und
- Fig. 2: Ausführungsbeispiel einer erfindungsgemäßen Vorrichtung, bei der das Getriebe durch das Ankoppelvorrichtungsgehäuse, das anzutreibende System und die Antriebsvorrichtung eingehaust ist.

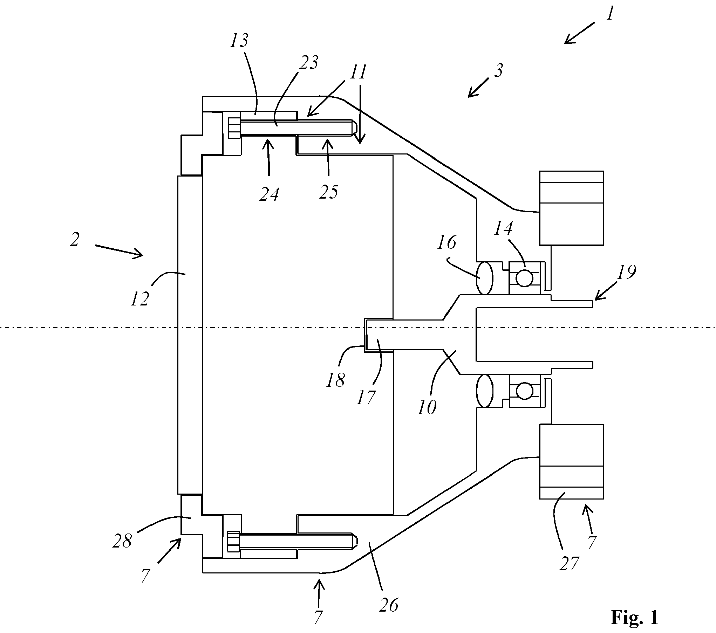

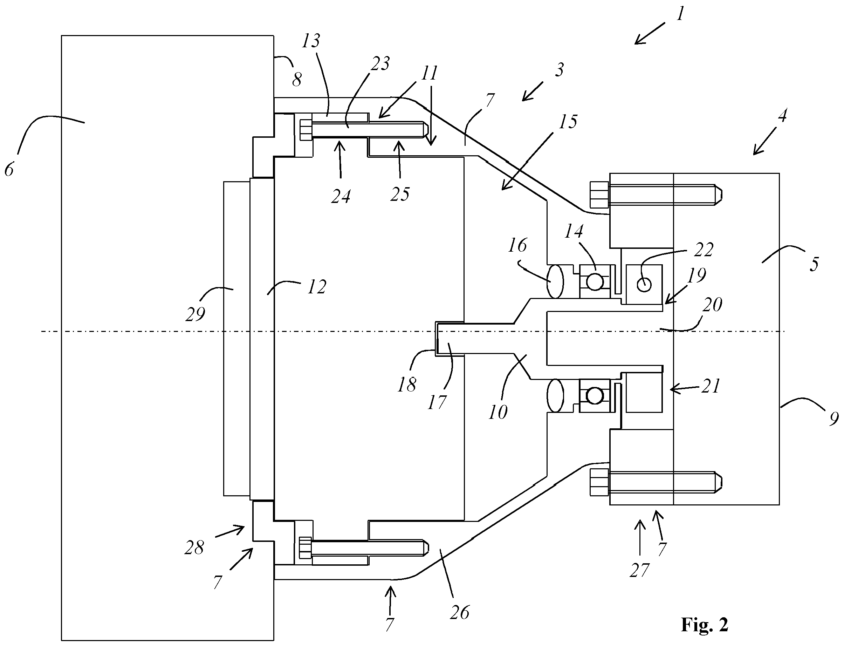

Figur 1 zeigt in einer Querschnittsdarstellung ein Ausführungsbeispiel eines erfindungsgemäßen Getriebesystems 1 das ein Getriebe 2 und ein Ausführungsbeispiel einer erfindungsgemäßen Ankoppelvorrichtung 3 beinhaltet. Das Getriebesystem 1 dient dazu, eine drehmomenteinspeisende Antriebsvorrichtung 4, beispielsweise einem Antriebsmotor 5, an ein anzutreibendes System 6 anzukoppeln, was in Figur 2 dargestellt ist.

Die Ankoppelvorrichtung 3 weist ein Ankoppelvorrichtungsgehäuse 7 zum drehmomentabstützenden Verbinden eines System-Drehmomentabstützelements, insbesondere eines Systemgehäuses 8, des anzutreibenden Systems 6 mit einem Antriebs-Drehmomentabstützelement der Antriebsvorrichtung 4, insbesondere einem Antriebsgehäuse 9, sowie eine innerhalb des Ankoppelvorrichtungsgehäuses 7 rotierbar gelagerte Übertragungswelle 10 auf.

Die Ankoppelvorrichtung 3 weist innerhalb des Ankoppelvorrichtungsgehäuses 7 eine Aufnahme 11 für das Getriebe 2 auf, in der das Getriebe 2 derart festgelegt ist, dass das Getriebe 2 allenfalls abgesehen von einem Getriebeabtrieb 12 des Getriebes 2 vollständig innerhalb des von dem Ankoppelvorrichtungsgehäuse 7 umgebenen Raum 15 angeordnet ist.

Ein Getriebe-Drehmomentabstützelement 13 des Getriebes 2 ist drehfest mit dem Ankoppelvorrichtungsgehäuse 7 verbunden. Die Ankoppelvorrichtung 3 weist hierzu ein Befestigungsmittel auf, das mehrere Befestigungsschrauben 23 beinhaltet. Die Befestigungsschrauben 23 verlaufen durch Durchgangsbohrungen 24 des flanschartig ausgebildeten Getriebe-Drehmomentabstützelements 13 und sind in Gewindebohrungen 25 des Ankoppelvorrichtungsgehäuses 7 eingeschraubt, wodurch das Getriebe-Drehmomentabstützelement 13 und das Ankoppeivorrichtungsgehäuse 7 drehfest miteinander verbunden sind. Die Gewindebohrungen 25 verlaufen in Axialrichtung.

Innerhalb des Ankoppelvorrichtungsgehäuses 7 befindet sich die mittels eines Wälzlagers 14 rotierbar gelagerte Übertragungswelle 10. Zur Abdichtung des von dem Ankoppeivorrichtungsgehäuse 7 umgebenen Raumes der Ankoppelvorrichtung 3 ist zwischen dem Ankoppelvorrichtungsgehäuse 7 und der Übertragungswelle 10 eine Wellendichtung 16 angeordnet.

Die Übertragungswelle 10 weist ein Abtriebsende 17 auf, das mit einem Getriebeeingang 18 des Getriebes 2 wirkverkoppelt ist. Beispielsweise kann das Abtriebsende 17 eine Außenverzahnung aufweisen, die mit wenigstens einem Zahnrad des Getriebes 2 in Zahneingriff steht. Insbesondere kann es sich bei dem Getriebe 2 um ein Zykloidgetriebe handeln. Bei einer solchen Ausführung kann vorteilhaft vorgesehen sein, dass eine Außenverzahnung des Abtriebsendes 17 der Übertragungswelle 10 in kämmendem Zahneingriff mit Außenverzahnungen der Exzenterwellen des Zykloidgetriebes steht.

Die Übertragungswelle 10 weist außerdem ein Antriebsende 19 auf, das dazu ausgebildet und bestimmt ist, kraftschlüssig mit einer Abtriebswelle 20 einer drehmomenteinspeisenden Antriebsvorrichtung 4 drehfest verbunden zu werden. Hierzu ist das Antriebsende 19 als geschlitzte Hohlwelle ausgebildet, in die die Abtriebswelle 20 eingesteckt und mittels eines Klemmrings 21, der eine Spannschraube 22 aufweist, festgeklemmt werden kann, um eine drehfeste Verbindung herzustellen.

Das Ankoppelvorrichtungsgehäuse 7 ist bei diesem Ausführungsbeispiel mehrteilig ausgebildet und weist einen Hauptabschnitt 26 und einen an dem Hauptabschnitt 26 befestigten Antriebsbefestigungsabschnitt 27 sowie einen an dem Hauptabschnitt 26 befestigten Systembefestigungsabschnitt 28 auf.

Die Ankoppelvorrichtung 3 ist derart ausgebildet, dass das Getriebe 2, insbesondere als eine fertig montierte und funktionsfähige Baueinheit, axial in die Aufnahme 11 eingeschoben und dort mittels der Befestigungsschrauben 23 fixiert werden kann, bevor der Systembefestigungsabschnitt 28 an dem Hauptabschnitt 26 befestigt wird.

Der Systembefestigungsabschnitt 28 dient dazu, eine drehmomentabstützende Verbindung zu dem anzutreibenden System 6 herzustellen. Hierzu können (nicht dargestellte) weitere Befestigungsschrauben und weitere Gewindebohrungen vorhanden sein. Der Systembefestigungsabschnitt 28 kann einen Flansch, insbesondere mit Gewindebohrungen und/oder Durchgangsbohrungen, aufweisen. Der Systembefestigungsabschnitt 28 kann insbesondere zusätzlich als Dichtungselement ausgebildet sein, insbesondere um eine flüssigkeitsdichte und/oder gasdichte Abdichtung des Innenraumes des Ankoppelvorrichtungsgehäuses zu erreichen. Alternativ ist es natürlich auch möglich, zwischen dem Systembefestigungsabschnitt 28 und dem anzutreibenden System 6 und/oder dem Hauptabschnitt 26 jeweils wenigstens eine Dichtung anzuordnen.

Der Antriebsbefestigungsabschnitt 27 dient dazu, eine drehmomentabstützende Verbindung zu der Antriebsvorrichtung 4 herzustellen. Der Antriebsbefestigungsabschnitt 27 kann insbesondere einen Flansch, insbesondere mit Gewindebohrungen und/oder Durchgangsbohrungen, aufweisen. Der Antriebsbefestigungsabschnitt 27 kann insbesondere zusätzlich als Dichtungselement ausgebildet sein, insbesondere um eine flüssigkeitsdichte und/oder gasdichte Abdichtung des inneren Raumes 8 des Ankoppelvorrichtungsgehäuses 7 zu erreichen. Alternativ ist es natürlich auch möglich, zwischen dem Ankoppelvorrichtungsgehäuses 7 und der Antriebsvorrichtung 4 wenigstens eine Dichtung anzuordnen.

Die Befestigungsschrauben 14 sind nicht mehr unmittelbar zugänglich, nachdem das Getriebesystem 2 an das anzutreibende System 6 angekoppelt wurde. Vielmehr sind die Köpfe der Befestigungsschrauben 23 verdeckt, so dass ein versehentliches Lösen dieser Befestigungsschrauben 23 wirkungsvoll verhindert ist.

Der Hauptabschnitt 26 weist eine Glockenform auf. Die Außenkontur verläuft stetig und/oder in Form einer zusammenhängenden Kurve, die keine Sprünge macht, keine Abwinklungen aufweist und die man ohne Abzusetzen zeichnen kann. Der Hauptabschnitt 26 des Ankoppelvorrichtungsgehäuses 7 ist außenseitig frei von Kanten, sowie frei von Vorsprüngen und Vertiefungen.

Die Befestigungsschrauben 23 sind bei diesem Ausführungsbeispiel als Innensechskantschrauben ausgebildet, deren Schraubenköpfe von der Getriebeseite aus mit einem Werkzeug zugänglich sind, solange das Getriebesystem 1 noch nicht an einem anzutreibenden System 6 befestigt wurde.

Figur 2 zeigt schematisch das in Figur 1 dargestellte Getriebesystem 1, das mit einem anzutreibenden System 6 und einer Antriebsvorrichtung 4 verbunden ist. Das Getriebe 2 ist durch das Ankoppelvorrichtungsgehäuse 7, das anzutreibende System 6 und die Antriebsvorrichtung 4 vollständig eingehaust.

Das Getriebesystem 1 dient dazu, die drehmomenteinspeisende Antriebsvorrichtung 4 an das anzutreibende System 6 triebtechnisch anzukoppeln. Hierbei werden genau genommen zwei Wirkverbindungen hergestellt. Zum einen wird eine (durch das Getriebe untersetzende oder übersetzende) Wirkverbindung der Abtriebswelle 20 der Antriebsvorrichtung 4 mit einem Antriebseingang 29 des anzutreibenden Systems 6 hergestellt, wobei der Antriebseingang 29 des anzutreibenden Systems 6 unmittelbar mit dem Getriebeabtrieb 12 des Getriebes 2 wirkverbunden wird. Zum anderen wird hierbei auch eine drehmomentabstützende Verbindung eines Antriebs-Drehmomentabstützelements, nämlich des Antriebsgehäuses 9 der Antriebsvorrichtung 4 zu einem Drehmomentabstützelement nämlich dem Systemgehäuse 8 des anzutreibenden Systems 6 hergestellt.

### Bezugszeichenliste:

- 1: Getriebesystem
- 2: Getriebe
- 3: Ankoppelvorrichtung
- 4: Antriebsvorrichtung
- 5: Antriebsmotor
- 6: anzutreibendes System
- 7: Ankoppelvorrichtungsgehäuse
- 8: Systemgehäuse
- 9: Antriebsgehäuse
- 10: Übertragungswelle
- 11: Aufnahme für das Getriebe 2
- 12: Getriebeabtrieb
- 13: Getriebe-Drehmomentabstützelement
- 14: Wälzlager
- 15: von dem Ankoppelvorrichtungsgehäuse 7 umgebener Raum
- 16: Wellendichtung
- 17: Abtriebsende
- 18: Getriebeeingang
- 19: Antriebsende
- 20: Abtriebswelle
- 21: Klemmring
- 22: Spannschraube
- 23: Befestigungsschraube
- 24: Durchgangsbohrung
- 25: Gewindebohrung
- 26: Hauptabschnitt
- 27: Antriebsbefestigungsabschnitt
- 28: Systembefestigungsabschnitt
- 29: Antriebseingang

## Patentansprüche

1. Ankoppelvorrichtung zum drehmomentübertragenden Ankoppeln einer drehmomenteinspeisenden Antriebsvorrichtung, insbesondere eines Antriebsmotors, an ein anzutreibendes System, wobei die Ankoppelvorrichtung ein Ankoppelvorrichtungsgehäuse zum drehmomentabstützenden Verbinden eines System-Drehmomentabstützelements, insbesondere eines Systemgehäuses, des anzutreibenden Systems mit einem Antriebs-Drehmomentabstützelement der Antriebsvorrichtung, insbesondere einem Antriebsgehäuse, sowie eine innerhalb des Ankoppelvorrichtungsgehäuses rotierbar gelagerte Übertragungswelle aufweist, **dadurch gekennzeichnet, dass** die Ankoppelvorrichtung innerhalb des Ankoppelvorrichtungsgehäuses eine Aufnahme für ein Getriebe aufweist, in der das Getriebe derart festlegbar ist, dass das Getriebe allenfalls abgesehen von einem Getriebeabtrieb des Getriebes vollständig innerhalb des von dem Ankoppelvorrichtungsgehäuse umgebenen Raumes angeordnet ist.

2. Ankoppelvorrichtung nach Anspruch 1, **dadurch gekennzeichnet, dass**
a. die Aufnahme dazu ausgebildet ist, ein als eine fertig montierte und funktionsfähige Baueinheit ausgebildetes Getriebe aufzunehmen, und/oder dass
b. das Getriebe axial in die Aufnahme einschiebbar ist.

3. Ankoppelvorrichtung nach Anspruch 1 oder 2, **dadurch gekennzeichnet, dass** die Aufnahme einen innenseitig im Ankoppelvorrichtungsgehäuse ausgebildeten, umlaufenden Falz zum Aufnehmen eines, insbesondere flanschartig ausgebildeten, Getriebe-Drehmomentabstützelements des Getriebes aufweist, insbesondere wobei das Getriebe-Drehmomentabstützelement Teil eines Getriebegehäuses ist

4. Ankoppelvorrichtung nach einem der Ansprüche 1 bis 3, **dadurch gekennzeichnet, dass** das Ankoppeivorrichtungsgehäuse mehrteilig ausgebildet ist.

5. Ankoppelvorrichtung nach Anspruch 4, **dadurch gekennzeichnet, dass** das Ankoppelvorrichtungsgehäuse einen Hauptabschnitt und einen daran befestigten oder befestigbaren Antriebsbefestigungsabschnitt und/oder einen daran befestigten oder befestigbaren Systembefestigungsabschnitt aufweist, insbesondere wobei
a. der Hauptabschnitt außen eine Glockenform oder eine Kegelstumpfform aufweist, und/oder
b. der Hauptabschnitt des Ankoppelvorrichtungsgehäuses rotationssymmetrisch ausgebildet ist oder dass die Außenseite des Hauptabschnitts des Ankoppelvorrichtungsgehäuses rotationssymmetrisch ausgebildet ist, und/oder
c. der Hauptabschnitt des Ankoppelvorrichtungsgehäuses außenseitig frei von Kanten und/oder frei von Vorsprüngen und/oder frei von Vertiefungen ist, und/oder
d. der Systembefestigungsabschnitt zusätzlich als Dichtungselement ausgebildet und/oder dass der Antriebsbefestigungsabschnitt ausgebildet ist.

6. Ankoppelvorrichtung nach einem der Ansprüche 1 bis 5, **dadurch gekennzeichnet, dass** das Ankoppelvorrichtungsgehäuse zumindest auf seiner Außenseite, insbesondere vollständig, mit einem lebensmittelechten Material beschichtet ist.

7. Ankoppelvorrichtung nach einem der Ansprüche 1 bis 6, **dadurch gekennzeichnet, dass** das Ankoppelvorrichtungsgehäuse aus einem lebensmittelechten Material hergestellt ist.

8. Ankoppelvorrichtung nach einem der Ansprüche 1 bis 7, **dadurch gekennzeichnet, dass**
a. das Ankoppelvorrichtungsgehäuse wenigstens teilweise, insbesondere vollständig, aus einer Metalllegierung, insbesondere aus Edelstahl, hergestellt ist, und/oder dass
b. das Ankoppelvorrichtungsgehäuse wenigstens teilweise, insbesondere vollständig, aus Kunststoff hergestellt ist.

9. Ankoppelvorrichtung nach einem der Ansprüche 1 bis 8, **dadurch gekennzeichnet, dass** ein Befestigungsmittel zum Befestigen des Getriebes derart angeordnet ist oder anordenbar ist, dass es nicht mehr unmittelbar zugänglich ist, nachdem die Ankoppelvorrichtung zusammen mit dem Getriebe an einem anzutreibenden System befestigt wurde.

10. Ankoppelvorrichtung nach Anspruch 9, **dadurch gekennzeichnet, dass**
a. das Befestigungsmittel wenigstens eine Befestigungsschraube aufweist, oder dass
b. das Befestigungsmittel wenigstens eine Befestigungsschraube aufweist, wobei das Ankoppelvorrichtungsgehäuse wenigstens eine Gewindebohrung aufweist, in die die Befestigungsschraube einschraubbar ist, insbesondere wobei die Gewindebohrung in Axialrichtung verläuft.

11. Ankoppelvorrichtung nach einem der Ansprüche 1 bis 10, **dadurch gekennzeichnet, dass**
a. die Übertragungswelle ein Abtriebsende aufweist, das dazu ausgebildet und bestimmt ist, mit einem Getriebeeingang des Getriebes wirkverkoppelt zu werden, und/oder dass
b. die Übertragungswelle ein Antriebsende aufweist, das dazu ausgebildet und bestimmt ist, insbesondere kraftschlüssig, mit einer Abtriebswelle einer drehmomenteinspeisenden Antriebsvorrichtung drehfest verbunden zu werden, und/oder dass
c. die Übertragungswelle mittels wenigstens eines Wälzlagers rotierbar gelagert ist.

12. Getriebesystem, das ein Getriebe und eine Ankoppelvorrichtung nach einem der Ansprüche 1 bis 11 beinhaltet, insbesondere wobei das Getriebe ein Zykloidgetriebe ist.

13. Antriebssystem, das eine drehmomenteinspeisende Antriebsvorrichtung und ein Getriebesystem nach Anspruch 12 beinhaltet.

14. Antriebssystem nach Anspruch 13, **dadurch gekennzeichnet, dass** die Antriebsvorrichtung ein, insbesondere elektrischer, Antriebsmotor ist oder dass die die Antriebsvorrichtung einen, insbesondere elektrischen, Antriebsmotor aufweist, insbesondere wobei die Antriebsvorrichtung ein weiteres Getriebe aufweist, das unmittelbar an die Ankoppelvorrichtung angekoppelt ist.

15. Vorrichtung, die ein anzutreibendes System aufweist, an das ein Antriebssystem nach Anspruch 14 drehmomentübertragend angekoppelt ist, insbesondere wobei das Getriebe durch das Ankoppelvorrichtungsgehäuse, das anzutreibende System und die Antriebsvorrichtung vollständig, insbesondere flüssigkeitsdicht und/oder gasdicht, eingehaust ist.
